# EUROPEAN PATENT APPLICATION

(11) **EP 4 813 679 A1**
(43) Date of publication of application: **30.09.2026**
(21) Application number: 26165722.5
(22) Date of filing: 18.03.2026
(51) Int. Cl.: B60H 1/24, B60J 7/043

(54) **ROOF ASSEMBLY OF VEHICLE**

(30) Priority: 25.03.2025 JP 2025050730; 02.02.2026 JP 2026015275
(71) Applicant: Toyota Jidosha Kabushiki Kaisha, Toyota-shi, Aichi-ken 471-8571 (JP)
(72) Inventor: MARUYAMA, Hiroto, TOYOTA-SHI, AICHI-KEN, 471-8571 (JP); ABE, Toshiaki, TOYOTA-SHI, AICHI-KEN, 471-8571 (JP); NAGASAKA, Osamu, TOYOTA-SHI, AICHI-KEN, 471-8571 (JP)
(74) Representative: Cabinet Beau de Loménie

(57) **Abstract**

A roof assembly (1) of a vehicle includes: a roof panel (11) having an opening; a roof window (4, 5) including the opening; a roof side rail (12); and a roof air passage connected to an air conditioning unit. The roof assembly (1) of the vehicle is provided with a ventilation hole around the roof window.

## Description

### BACKGROUND OF THE INVENTION

### 1. Field of the Invention

The present invention relates to a roof assembly of a vehicle.

### 2. Description of Related Art

In a related art, a light-shielding shade for blocking sunlight transmitted through a roof window and irradiating the inside of a vehicle cabin is applied to a vehicle having a configuration (hereinafter referred to as a roof window) in which a glass is installed on a roof opening called a sunroof and a panoramic roof. However, a general light-shielding shade merely has a function of simply blocking the irradiation of direct sunlight into the vehicle cabin, and there has been room for improvement in enhancing the comfort inside the vehicle cabin.

A light-shielding shade disclosed in Japanese Unexamined Patent Application Publication No. 2002-331822 (JP 2002-331822 A) is installed on the inner side of each of a front glass and a rear glass and configures a double structure with those glasses. High-temperature air staying in an air passage formed by the light-shielding shade and the glass is exhausted by the activation of a ventilation fan.

### SUMMARY OF THE INVENTION

However, merely blocking sunlight or exhausting the air around the roof is insufficient to reduce the deterioration of the environment inside the vehicle cabin due to thermal energy that intrudes into the vehicle cabin through the roof window. The above is not limited to cases in which heat intrudes into the vehicle cabin (for example, the summer season). In cases in which cold (a negative amount of thermal energy that removes thermal energy of occupants or walls inside the vehicle cabin is defined as cold in the present specification) intrudes into the vehicle cabin (for example, the winter season), merely applying a cold-blocking shade or exhausting the air around the roof is insufficient to reduce the deterioration of the environment inside the vehicle cabin due to cold that intrudes into the vehicle cabin through the roof window.

The present invention provides a structure of a roof portion of a vehicle capable of reducing deterioration of an environment inside a vehicle cabin due to thermal energy (heat or cold) that intrudes into the vehicle cabin through a roof window.

A roof assembly of a vehicle according to an aspect of the present invention includes: a roof panel having an opening; a roof window including the opening; a roof side rail; and a roof air passage connected to an air conditioning unit. The roof assembly is provided with a ventilation hole around the roof window.

By this particular feature, conditioned air (or a part of the conditioned air) generated by the air conditioning unit flows to the roof portion (roof assembly) through the roof air passage and passes through the ventilation hole provided around the roof window. As a result, when cooling or heating by radiation is performed, for example, the temperature of a surface of the roof portion of the vehicle facing the inside of the vehicle cabin is maintained at a temperature around that of the conditioned air. For example, the roof portion is cooled at the time of a cooling request, and the roof portion is heated at the time of a heating request. As a result, the environment inside the vehicle cabin can be improved by radiation using the roof portion (removing thermal energy from the occupants and the walls inside the vehicle cabin by radiation at the time of a cooling request (removing thermal energy as a result of transfer of radiant thermal energy from the occupants and the walls inside the vehicle cabin to the cooled roof portion by infrared rays) and heating the occupants and the walls inside the vehicle cabin by radiation (radiant thermal energy) at the time of a heating request), the deterioration of the environment inside the vehicle cabin due to thermal energy (heat or cold) that intrudes into the vehicle cabin through the roof window can be reduced, and the comfort inside the vehicle cabin can be enhanced. The conditioned air that has passed through a ventilation port flows into the vehicle cabin. It is also possible to contribute to the enhancement of the comfort inside the vehicle cabin by blowing the conditioned air that pass through the ventilation hole and flows into the vehicle cabin toward the occupants from above.

In the above aspect, the conditioned air blown from the ventilation holes may be air of which temperature is lower than the temperature inside the vehicle cabin.

This is a measure against a case in which heat intrudes into the vehicle cabin from the roof window as in the summer season and the like. In other words, the deterioration of the environment inside the vehicle cabin due to heat that intrudes into the vehicle cabin through the roof window is reduced by causing air at a relatively low temperature to flow to the roof air passage. In this case, for example, it is possible to contribute to reducing drowsiness and providing refreshing effects for a driver.

In the above aspect, the conditioned air blown from the ventilation holes may be air of which temperature is higher than the temperature inside the vehicle cabin.

This is a measure against a case in which cold intrudes into the vehicle cabin from the roof window as in the winter season and the like. In other words, the deterioration of the environment inside the vehicle cabin due to cold that intrudes into the vehicle cabin through the roof window is reduced by causing air at a relatively high temperature to flow to the roof air passage. In this case, it is possible to contribute to providing sleep-inducing effects and relaxing effects to occupants other than the driver, for example.

In the above aspect, the roof air passage may be installed in the roof side rail. The ventilation hole may be provided in a vertical wall on a vehicle inner side of the roof side rail and communicates with the roof air passage.

As a result, cases in which air around the roof window easily affected by the temperature of outside air reaches the occupants can be reduced, and the environment inside the vehicle cabin can be improved.

In the above aspect, the roof assembly may further include a shade that has a hollow interior space and covers at least a part of the roof window. The roof air passage may communicate with the hollow interior space of the shade. The ventilation hole may be provided in a lower surface of the shade.

With the configuration above, actions and effects such as the improvement of the environment inside the vehicle cabin (ensuring the comfort of the occupants) by the optimization of the temperature of the shade itself performed by cooling or heating the inside of the shade or the surface of the shade facing the inside of the vehicle cabin and the reduction in the intrusion of heat or cold into the vehicle cabin from the roof window can be realized by the shade, and the comfort inside the vehicle cabin can be sufficiently enhanced. It is also possible to contribute to the enhancement of the comfort inside the vehicle cabin by blowing conditioned air toward the occupants from above through the shade.

In the above aspect, the number of openings of the ventilation hole per unit area of the lower surface of the shade may be larger in a region corresponding to a sitting position of an occupant than in another region.

With the configuration above, focused radiation can be performed with respect to the sitting positions of the occupants, and the comfort inside the vehicle cabin can be enhanced even more. The conditioned air supplied toward the inside of the vehicle cabin can also be caused to flow toward the occupants from the ventilation hole in a focused manner.

In the above aspect, the roof window may have a plurality of glasses. A space may be provided between each adjacent pair of the glasses.

With the configuration above, gas in the space between each glass is used as a thermal insulation layer, or thermal conduction is inhibited by drawing vacuum inside the space between each glass. As a result, intrusion of heat or cold into the vehicle cabin from the roof window can be reduced, and the temperature regulation effect inside the vehicle cabin can be enhanced.

In the above aspect, a glass positioned on the inner side of the vehicle cabin among the glasses may be a resin glass.

With the configuration above, cases in which the weight of the entire vehicle significantly increases can be reduced even with a configuration including a plurality of glasses. By reducing thermal conduction by a resin glass, intrusion of heat and cold into the vehicle cabin can be reduced.

In the above aspect, a glass positioned in an uppermost portion among the glasses may include a reflective material that reflects solar radiation.

With the configuration above, as a result of the glass positioned in the uppermost portion reflecting solar radiation, the intrusion of heat into the vehicle cabin from the roof window can be reduced, and the cooling effect inside the vehicle cabin can be enhanced at the time of a cooling request.

In the present invention, the conditioned air from the air conditioning unit is caused to pass through the ventilation hole provided around the roof window. As a result, it becomes possible to enhance the comfort inside the vehicle cabin.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view of a roof portion of a vehicle according to an embodiment seen from the inner side of a vehicle cabin;
FIG. 2 is a view equivalent to FIG. 1 for describing a mounting operation of a shade in the embodiment;
FIG. 3 is a sectional view taken along line III-III in FIG. 1;
FIG. 4 is a view equivalent to FIG. 3 in Modification Example 1;
FIG. 5 is a view equivalent to FIG. 1 in Modification Example 2;
FIG. 6 is a view of an extended state of a shade in Modification Example 3 seen from a side inside a vehicle cabin;
FIG. 7 is a schematic view for describing a moving mechanism of the shade in Modification Example 3;
FIG. 8 is a view of the inside of a vehicle cabin illustrating an extended state of a shade in Modification Example 4 seen from a side; and
FIG. 9 is a view illustrating the inside of the vehicle cabin for describing a blowing state of conditioned air toward the shade in Modification Example 4.

### DETAILED DESCRIPTION OF EMBODIMENTS

An embodiment of the present invention is described below based on the drawings. In the present embodiment, a case in which the present invention is applied as a structure of a roof portion of a vehicle including a panoramic roof is described as an example. In the present embodiment, a case in which a front shade and a rear shade are mounted afterwards on a front window portion and a rear window portion described later is described.

### Overall Configuration of Roof Portion

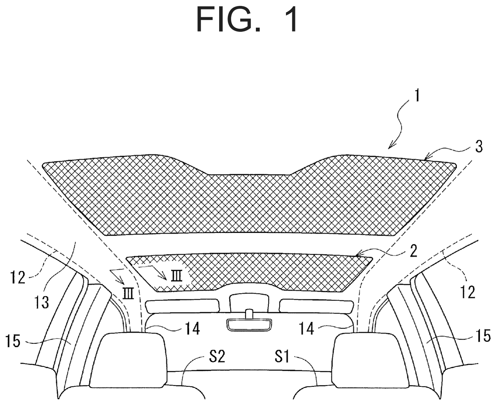

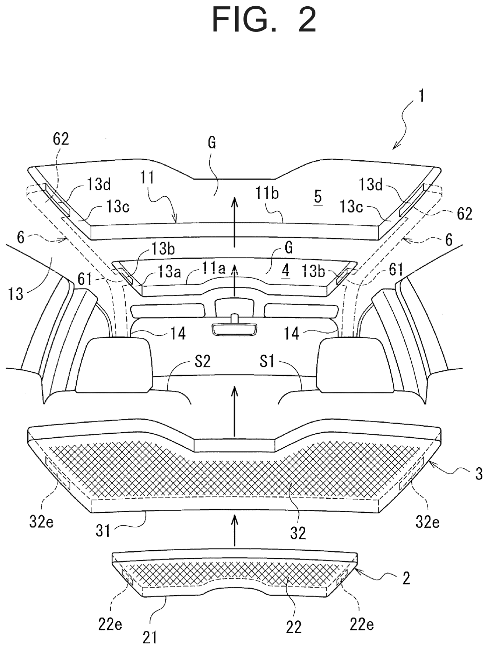

FIG. 1 is a view of a roof portion (roof assembly) 1 of the vehicle according to the present embodiment seen from the inner side of a vehicle cabin. FIG. 2 is a view equivalent to FIG. 1 for describing a mounting operation of each of shades 2, 3 in the present embodiment.

As illustrated in those drawings, the roof portion 1 of the vehicle is configured as a panoramic roof. Specifically, as illustrated in FIG. 2, a front window portion 4 installed in a position close to the front side of the vehicle, and a rear window portion 5 installed in a position close to the rear side of the vehicle are included. The front window portion 4 is positioned above front seats (a driver's seat S1 and a passenger seat S2). The rear window portion 5 is positioned above rear seats (not shown). The front window portion 4 and the rear window portion 5 are examples of a roof window in the present invention.

As illustrated in FIG. 1, the front shade 2 is mounted on the front window portion 4, and the rear shade 3 is mounted on the rear window portion 5. As illustrated in FIG. 2, the front shade 2 is mounted on the front window portion 4 from the lower side. Similarly, the rear shade 3 is also mounted on the rear window portion 5 from the lower side. Details of those mounting states are described later.

The outer edge shape of the front shade 2 substantially matches with the outer edge shape of the front window portion 4. In a state in which the front shade 2 is mounted on the front window portion 4, the entire front window portion 4 is covered by the front shade 2 (see FIG. 1). Similarly, the outer edge shape of the rear shade 3 substantially matches with the outer edge shape of the rear window portion 5. In a state in which the rear shade 3 is mounted on the rear window portion 5, the entire rear window portion 5 is covered by the rear shade 3. In the present embodiment, the entire front window portion 4 is covered by the front shade 2, but a part of the front window portion 4 may be covered by the front shade 2. In the present embodiment, the entire rear window portion 5 is covered by the rear shade 3, but a part of the rear window portion 5 may be covered by the rear shade 3.

As illustrated in FIG. 2, the roof portion 1 of the vehicle includes a roof panel 11 in which openings 11a, 11b for configuring the front window portion 4 and the rear window portion 5 are formed, and a pair of left and right roof side rails 12, 12 (see broken lines in FIG. 1). The roof panel 11 and the roof side rails 12, 12 on the inner side of the vehicle cabin are covered by a roof trim 13 serving as an internal material of the vehicle cabin.

As illustrated in FIG. 1, the roof side rails 12, 12 are vehicle frame members positioned on both sides in the vehicle width direction and extending along the front-rear direction of the vehicle body. Front end portions of the roof side rails 12 are connected to upper end portions of front pillars 14. Intermediate portions of the roof side rails 12 in the front-rear direction of the vehicle body are connected to upper end portions of center pillars 15. Rear end portions of the roof side rails 12 are connected to upper end portions of rear pillars (not shown). The roof side rails 12, the front pillars 14, the center pillar 15, and the rear pillars have a closed section structure formed by joining a plurality of panel materials and are configured to ensure high rigidity in an upper portion of the vehicle. The roof side rails 12, 12 are coupled to each other by a roof cross member (not shown).

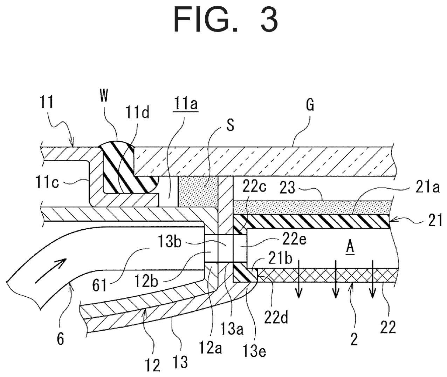

The configuration around the roof side rail 12 is described. FIG. 3 is a sectional view taken along line III-III in FIG. 1. FIG. 3 illustrates the configuration around the roof side rail 12 that is a mounting part for the front shade 2 and that is positioned on the left side in the vehicle width direction, but the place around the roof side rail 12 positioned on the right side in the vehicle width direction also has a similar configuration (bilaterally symmetrical configuration). A mounting part for the rear shade 3 also has a similar configuration. The configuration around the roof side rail 12 illustrated in FIG. 3 is one example, and the present invention is not limited to this configuration.

As illustrated in FIG. 3, an edge portion of the opening 11a in the roof panel 11 is joined to an upper surface of the roof side rail 12. Specifically, the edge portion of the opening 11a in the roof panel 11 includes a vertical portion 11c formed by being bent in the vertical direction, and a horizontal portion 11d that extends in the horizontal direction from a lower end of the vertical portion 11c toward the central side in the vehicle width direction, and the horizontal portion 11d is joined to the upper surface of the roof side rail 12 by means such as welding.

A roof glass G having a shape that covers the opening 11a is placed on the upper surface of the roof side rail 12 via a seal material S. An outer edge of the roof glass G is positioned in the vicinity of the vertical portion 11c of the roof panel 11, and a weatherstrip W is fitted into a place between the outer edge of the roof glass G and the vertical portion 11c of the roof panel 11 and prevents intrusion of rainwater from an outer edge part of the roof glass G.

### Configuration of Roof Air Passage

As one feature of the present embodiment, a roof-side duct 6 branched from an air duct of an air conditioning unit (not shown) is installed on the inside of the roof side rail 12 (see FIG. 3). As illustrated by broken lines in FIG. 2, for example, the roof-side ducts 6 extend from the inside of the front pillars 14 to the inside of the roof side rails 12. In other words, a lower end part (an upstream-side part in the flow direction of the conditioned air) of each roof-side duct 6 is connected to an air duct of the air conditioning unit installed inside a dashboard (not shown). In the present embodiment, the roof-side ducts 6 are installed inside the roof side rails 12, but a space for installing the roof-side ducts 6 may be ensured between the roof side rails 12 and the roof trim 13, and the roof-side ducts 6 may be installed in the space. In other words, the structure for installing the roof-side ducts 6 is not particularly limited.

The air conditioning unit is a well-known air conditioning unit that performs air conditioning inside the vehicle cabin. In other words, the air conditioning unit includes a refrigerant circulation circuit configured to include a compressor, a condenser, a pressure reducing valve, an evaporator, and the like (not shown), and a heater core (for example, a heater core into which engine coolant is introduced) installed in an air duct in which the evaporator is installed, and generates conditioned air of which temperature and humidity are adjusted in the air duct by adjustment of the flow rate ratio between air that passes through the evaporator and air that passes through the heater core (air of which temperature is lower than the temperature inside the vehicle cabin or air of which temperature is higher than the temperature inside the vehicle cabin in the present invention).

As described above, as a result of upstream ends of the roof-side ducts 6 being connected to the air duct of the air conditioning unit, a part of the conditioned air flowing through the air duct is introduced to the roof-side ducts 6. In other words, the conditioned air introduced to the roof-side ducts 6 is guided from the inside of the front pillars 14 to the inside of the roof side rails 12 by the roof-side ducts 6 and reaches the roof portion 1. Therefore, an internal passage of the roof-side duct 6 is an example of a roof air passage in the present invention.

In the present embodiment, the roof-side ducts 6 extend from the inside of the front pillars 14 to the inside of the roof side rails 12, but the present invention is not limited thereto, and the roof-side ducts 6 may extend from the inside of the center pillars 15 to the inside of the roof side rails 12.

A valve that can be opened and closed may be provided at a position at which the roof-side duct 6 is connected to the air duct, and the volume of the conditioned air introduced into the roof-side duct 6 may be adjustable by the adjustment of the opening degree of the valve. The opening degree of the valve (the volume of the conditioned air introduced to the roof-side duct 6) may be adjusted by operation of a switch or a dial installed on an air conditioning operation panel (not shown) by an occupant, or may be automatically adjusted in accordance with a difference between a set temperature in the air conditioning unit (a set temperature inside the vehicle cabin set by the occupant) and the temperature inside the vehicle cabin or the outside air temperature.

As illustrated in FIG. 2 and FIG. 3, front-side air holes 12b, 13b that communicate with each other across the horizontal direction are formed in vertical wall portions 13a of the roof trim 13 and vertical wall portions 12a of the roof side rails 12 configuring the place around the edge portion of the opening 11a configuring the front window portion 4 (only the front-side air holes 13b formed in the vertical wall portions 13a of the roof trim 13 can be seen in FIG. 2).

Similarly, in vertical wall portions 13c of the roof trim 13 (see FIG. 2) and the vertical wall portions 12a of the roof side rails 12 configuring the place around the edge portion of the opening 11b configuring the rear window portion 5, rear-side air holes 13d that pass therethrough across the horizontal direction are formed as well (only the rear-side air holes 13d formed in the vertical wall portions 13c of the roof trim 13 can be seen in FIG. 2).

As illustrated in FIG. 2, each roof-side duct 6 includes a front-side supply portion 61 corresponding to the front window portion 4, and a rear-side supply portion 62 corresponding to the rear window portion 5. The front-side supply portion 61 and the rear-side supply portion 62 extend toward the inner side in the vehicle width direction orthogonal to the extending direction of the roof side rails 12 (the front-rear direction of the vehicle body) with a relatively short dimension.

As illustrated in FIG. 3, the front-side supply portion 61 is connected to an opening edge portion of the front-side air hole 12b in the roof side rail 12, and the internal space of the front-side supply portion 61 communicates with the front-side air holes 12b, 13b. The rear-side supply portion 62 is connected to an opening edge portion of the rear-side air hole (not shown) in the roof side rail 12, and the internal space of the rear-side supply portion 62 communicates with the rear-side air hole 13d. In other words, conditioned air flowing through the roof-side duct 6 is introduced to each of the front-side air holes 12b, 13b and the rear-side air hole 13d.

### Configuration of Shades

Next, the configuration of the shades 2, 3 is described. The shades 2, 3 have different outer edge shapes, but other configurations are substantially the same. Therefore, here, the configuration of the front shade 2 is mainly described.

As illustrated in FIG. 2 and FIG. 3, the front shade 2 is configured to include a frame body 21 made of resin, a surface material 22 made of fabric, and a thermal insulation material 23 (see FIG. 3). The color and the thickness dimension of the frame body 21 and the surface material 22 are not particularly limited, but the frame body 21 is preferably able to block sunlight transmitted through the front window portion 4 and radiated into the vehicle cabin. In other words, the frame body 21 preferably has any color other than transparent. As the surface material 22, the surface material 22 on which colors, patterns, photographs, illustrations, paintings, and the like that evoke a sense of coolness are provided is preferably used for the purpose of providing comfort inside the vehicle cabin during the summer season. Meanwhile, the surface material 22 on which colors, patterns, photographs, illustrations, paintings, and the like that evoke a sense of warmness are provided is preferably used for the purpose of providing comfort inside the vehicle cabin during the winter season.

As illustrated in FIG. 3, the frame body 21 includes a top plate portion 21a, a bottom plate portion 21b, and an outer wall portion 22c. The shapes of the top plate portion 21a and the bottom plate portion 21b in plan view substantially match with the outer edge shape of the front window portion 4. An outer edge portion of the top plate portion 21a and an outer edge portion of the bottom plate portion 21b are coupled to each other by the outer wall portion 22c. The height dimension of the outer wall portion 22c is set to be relatively short, and the height dimension of the entire front shade 2 is set to be short (have a flat shape). Specifically, the dimension is set such that a lower portion of the front shade 2 does not protrude downward from the roof trim 13 in a state in which the front shade 2 is mounted on the front window portion 4. A large opening 22d is provided in a central portion of the bottom plate portion 21b, and the surface material 22 is installed across the entire opening 22d. As a result, a space surrounded by the frame body 21 and the surface material 22 is configured as a flat in-shade space A having a predetermined height dimension.

In the outer wall portion 22c of the frame body 21, a conditioned air introducing hole 22e is formed in a position corresponding to the front-side air holes 12b, 13b (a position corresponding to the front-side air holes 12b, 13b in a state in which the front shade 2 is mounted on the front window portion 4). The opening shape of the conditioned air introducing hole 22e substantially matches with the opening shapes of the front-side air holes 12b, 13b. For example, as illustrated in FIG. 2, the opening shapes of the conditioned air introducing hole 22e and the front-side air hole 13b are rectangular.

As a result, as illustrated in FIG. 3, in a state in which the front shade 2 is mounted on the front window portion 4, the front-side air holes 12b, 13b and the conditioned air introducing hole 22e are placed in a state of communicating with each other, the conditioned air flowing through the roof-side duct 6 passes through the front-side supply portion 61 and then passes through the front-side air holes 12b, 13b and the conditioned air introducing hole 22e to be introduced to the in-shade space A.

In the case of the rear shade 3, as illustrated in FIG. 2, the rear-side supply portion 62 communicates with the rear-side air hole 13d formed in the vertical wall portion 13c of the roof trim 13. In a state in which the rear shade 3 is mounted on the rear window portion 5, a conditioned air introducing hole 32e formed in a frame body 31 of the rear shade 3 communicates with the rear-side air hole 13d, and the conditioned air flowing through the roof-side duct 6 passes through the rear-side supply portion 62 and then passes through the rear-side air hole 13d and the conditioned air introducing hole 32e to be introduced to an in-shade space.

The surface materials 22, 32 in the shades 2, 3 are made of fabric, and hence there are gaps (openings) between fibers configuring the surface materials 22, 32, the conditioned air introduced to the in-shade space A can pass through those gaps (see arrows in FIG. 3). Therefore, each of the gaps between the fibers is an example of "a ventilation hole around a roof window" in the present invention.

As a structure of attaching the front shade 2 with respect to the roof trim 13, in the roof trim 13, a lower end of an opening edge portion corresponding to the front window portion 4 is formed as a locking portion 13e formed to protrude in the horizontal direction. A lower surface of the bottom plate portion 21b of the frame body 21 is locked to an upper surface of the locking portion 13e. As a result, the front shade 2 is supported in a state of being prevented from falling. The entire front shade 2 is configured by resin and fabric, and the front shade 2 has a flat shape. Therefore, the front shade 2 is light in weight, and it is easy to perform the attaching operation with respect to the roof trim 13.

The thermal insulation material 23 is attached across the entire upper surface of the top plate portion 21a of the frame body 21. By the thermal insulation material 23, cases in which thermal energy (heat or cold) that passes through the roof glass G and intrudes into the vehicle cabin transferred to the front shade 2 are reduced. As described above, cold can be defined as a negative amount of thermal energy that removes thermal energy of the occupants or walls inside the vehicle cabin.

The height dimension of the entire front shade 2 is set to be slightly shorter than the interval dimension between an upper surface of the locking portion provided on the roof trim 13 and a lower surface of the roof glass G. Therefore, there is a space between the upper surface of the thermal insulation material 23 and the lower surface of the roof glass G. Air in the space also functions as a thermal insulation layer, and cases in which thermal energy (heat or cold) that passes through the roof glass G and intrudes into the vehicle cabin is transferred to the front shade 2 can be reduced.

Similar configurations also apply to the rear shade 3.

### Air Conditioning Operation

Next, an air conditioning (temperature regulation) operation in accordance with the configuration the roof portion 1 configured as described above is described. When air conditioning inside the vehicle cabin is performed, conditioned air passes through the air duct from the air conditioning unit and is supplied from each register (the register provided at the dashboard and the like) toward the inside of the vehicle cabin, but the supply of the conditioned air is well known, and hence description here is omitted. Here, an air conditioning operation for a case in which heat intrudes into the vehicle cabin in the summer season is described.

A part of conditioned air (dehumidified cool air) generated by the air conditioning unit is introduced to the roof-side ducts 6 from the air duct. The conditioned air is guided by the roof-side ducts 6, flows from the inside of the front pillars 14 to the inside of the roof side rails 12, and reaches the roof portion 1.

The conditioned air that has reached the front-side supply portions 61 of the roof-side duct 6 passes through the front-side air holes 12b in the roof side rails 12, the front-side air holes 13b in the roof trim 13, and the conditioned air introducing holes 22e in the front shade 2 from the front-side supply portions 61 and is introduced to the in-shade space A of the front shade 2.

The conditioned air introduced to the in-shade space A passes through the gaps in the surface material 22 (the openings between the fibers). As a result, the temperature of a lower surface of the front shade 2 (a surface facing the inside of the vehicle cabin) is cooled to a temperature around that of the conditioned air. As a result of the conditioned air flowing in the in-shade space A, the entire front shade 2 is also cooled to a temperature around that of the conditioned air. The conditioned air that has passed through the gaps in the surface material 22 is also supplied toward the front seats (the driver's seat S1 and the passenger seat S2). The thermal insulation material 23 is attached to an upper surface of the top plate portion 21a of the frame body 21, and hence cases in which thermal energy that passes through the roof glass G and intrudes into the vehicle cabin is transferred to the front shade 2 are reduced, and cases in which the temperature of the front shade 2 itself becomes high or the temperature of the conditioned air in the in-shade space A becomes high are reduced.

Meanwhile, the conditioned air that has reached the rear-side supply portions 62 of the roof-side duct 6 passes through the rear-side air holes in the roof side rails 12, the rear-side air holes 13d in the roof trim 13, and the conditioned air introducing holes 32e in the rear shade 3 from the rear-side supply portions 62 and is introduced to the in-shade space of the rear shade 3.

The conditioned air introduced to the in-shade space passes through the gaps in the surface material 32 in the rear shade 3 as well. As a result, the temperature of a lower surface of the rear shade 3 is cooled to a temperature around that of the conditioned air. As a result of the conditioned air flowing in the in-shade space, the entire rear shade 3 is also cooled to a temperature around that of the conditioned air. The conditioned air that has passed through the gaps in the surface material 32 is also supplied toward the rear seats. The thermal insulation material is attached to an upper surface of the top plate portion of the frame body 31 in the rear shade 3 as well, and hence cases in which thermal energy that passes through the roof glass G and intrudes into the vehicle cabin is transferred to the rear shade 3 are reduced, and cases in which the temperature of the rear shade 3 itself becomes high or the temperature of the conditioned air in the in-shade space becomes high are reduced.

By such an operation, the environment inside the vehicle cabin can be improved (the comfort of the occupants can be ensured) by radiation using each of the shades 2, 3 (removal of thermal energy as a result of transfer of radiant thermal energy from the occupants and the walls inside the vehicle cabin to each of the cooled shades 2, 3 by infrared rays), the deterioration of the environment inside the vehicle cabin due to thermal energy (heat) that intrudes into the vehicle cabin through the front window portion 4 and the rear window portion 5 can be reduced, and the comfort inside the vehicle cabin can be enhanced. In other words, actions and effects such as the improvement of the environment inside the vehicle cabin due to the optimization of the temperature of the shades 2, 3 themselves and the reduction in the intrusion of heat from the front window portion 4 and the rear window portion 5 into the vehicle cabin can be realized by each of the shades 2, 3, and the comfort inside the vehicle cabin can be sufficiently enhanced. In addition, it is also possible to contribute to the enhancement of the comfort inside the vehicle cabin by blowing conditioned air toward the occupants from above.

There is a fear that condensation may occur on the lower surface of each of the shades 2, 3 (for example, a front surface of the surface material 22 facing the inside of the vehicle cabin) due to the cooling of each of the shades 2, 3. However, the conditioned air that passes through gaps in the surface material 32 is dehumidified (dehumidified by passing through the evaporator of the refrigerant circulation circuit), and hence it is also possible to eliminate or reduce the condensation.

The operation described above is for a case in which heat intrudes into the vehicle cabin, but a similar effect can also be exhibited in a case in which cold intrudes into the vehicle cabin in the winter season and the like. In this case, a part of conditioned air (warm air) generated by the air conditioning unit is introduced to the in-shade space A of each of the shades 2, 3 by the roof-side ducts 6, the conditioned air introduced to the in-shade space A passes through the gaps in the surface materials 22, 32, and the temperature of the lower surfaces of the shades 2, 3 is heated to a temperature around that of the conditioned air. As a result of the conditioned air flowing in the spaces A in the shades, the entire shades 2, 3 are also heated to a temperature around that of the conditioned air. The conditioned air that has passed through the gaps in the surface materials 22, 32 is also supplied toward each seat. As a result, the deterioration of the environment inside the vehicle cabin due to cold that intrudes into the vehicle cabin through the front window portion 4 and the rear window portion 5 can be reduced, and the comfort inside the vehicle cabin can be enhanced.

In the present embodiment, in a case in which heat easily intrudes into the vehicle cabin from each of the window portions 4, 5 as in the summer season and the like, it is possible to contribute to reducing drowsiness and providing refreshing effects for the driver. Meanwhile, in a case in which cold air easily intrudes into the vehicle cabin from each of the window portions 4, 5 as in the winter season and the like, it is possible to contribute to sleep-inducing effects and relaxing effects for occupants other than the driver.

### Advantages of Embodiment

As described above, in the present embodiment, conditioned air from the air conditioning unit is caused to flow to the roof portion 1 through the roof-side ducts 6, and the conditioned air flowing to the roof portion 1 passes through the ventilation holes in each of the shades 2, 3. As a result, the deterioration of the environment inside the vehicle cabin due to thermal energy (heat or cold) that intrudes into the vehicle cabin through the front window portion 4 and the rear window portion 5 can be reduced, and the comfort inside the vehicle cabin can be enhanced.

### Modification Example 1

Next, Modification Example 1 is described. This modification example is different from the embodiment described above in terms of the configuration of the front shade 2 and the rear shade 3. Other configurations are similar to those of the embodiment described above, and hence only the configuration of the front shade 2 and the rear shade 3 is described here.

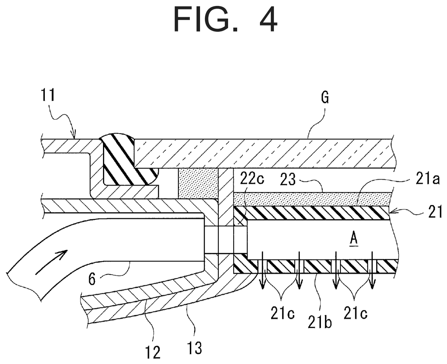

FIG. 4 is a view equivalent to FIG. 3 in this modification example. As illustrated in FIG. 4, the bottom plate portion 21b of the frame body 21 of the front shade 2 in this modification example covers the entire lower side of the in-shade space A, and openings 21c, 21c, ... serving as ventilation holes are formed in positions at a predetermined interval. In other words, the conditioned air introduced to the in-shade space A passes through each of the openings 21c, 21c, .... For example, the openings 21c each having an inner diameter of 1 mm are formed in positions at an interval of 5 mm. Those values are not limited to the above and may be freely set. Similar configurations also apply to the configuration of the rear shade 3.

As with the embodiment described above, the deterioration of the environment inside the vehicle cabin due to thermal energy (heat or cold) that intrudes into the vehicle cabin through the front window portion 4 and the rear window portion 5 can be reduced, and the comfort inside the vehicle cabin can be enhanced in this modification example as well.

In this modification example, the shades 2, 3 do not have the surface materials 22, 32 made of fabric, and hence the configuration can be simplified and the manufacturing process can be streamlined.

### Modification Example 2

Next, Modification Example 2 is described. This modification example is different from the embodiment described above in terms of the configuration of the front shade 2 and the rear shade 3 as well. Other configurations are similar to those of the embodiment described above, and hence only the configuration of the front shade 2 and the rear shade 3 is described here as well.

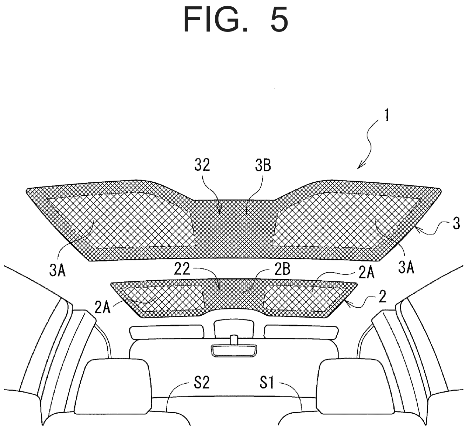

FIG. 5 is a view equivalent to FIG. 1 in this modification example. As illustrated in FIG. 5, as with the embodiment described above, the front shade 2 and the rear shade 3 in this modification example are configured by the surface materials 22, 32 of which lower surfaces are made of fabric, but gaps between the fibers configuring the surface materials 22, 32 are different depending on the region. In other words, as the way of weaving the fibers configuring the surface materials 22, 32, a region in which the gaps between the fibers are small (the weave is dense) and a region in which the gaps are large (the weave is loose) are set.

Specifically, the gaps in a region corresponding to sitting positions of the occupants are large, and gaps in a region corresponding to other regions are small. Therefore, in the surface material 22 of the front shade 2, the gaps are large in regions 2A, 2A positioned above the driver's seat S1 and the passenger seat S2, and the gaps are small in another region 2B. Similarly, in the surface material 32 of the rear shade 3, the gaps are large in regions 3A, 3A positioned above sitting positions of the rear seats, and the gaps are small in another region 3B. Those configurations are examples of a feature in which " the number of openings of the ventilation hole per unit area of the lower surface of the shade is larger in a region corresponding to a sitting position of an occupant than in another region" in the present invention.

As a result, focused radiation can be performed with respect to the sitting positions of the occupants, and the comfort inside the vehicle cabin can be enhanced even more. The conditioned air supplied toward the inside of the vehicle cabin can also be caused to flow toward the occupants in a focused manner.

Even when the openings 21c, 21c, ... are provided as in Modification Example 1 described above, a similar effect can be exhibited by changing the number of the openings 21c per unit area of each of the lower surfaces of the shades 2, 3.

### Modification Example 3

Next, Modification Example 3 is described. The embodiment and each modification example described above have a configuration in which the shades 2, 3 are mounted on and removed from the front window portion 4 and the rear window portion 5, respectively. In this modification example, instead of the configuration above, a membrane-like shade is configured to be unremovable, and is configured to be movable (movable along the horizontal direction) between a position of enabling cooling or heating of the inside of the vehicle cabin by radiation by being in a state in which the lower side of the window portion (roof window) is covered (a state of providing a space for causing conditioned air to flow between the shade and the window portion) and a position of retracting from the window portion such that the window portion faces the inside of the vehicle cabin (a state in which the outside can be seen from the inside of the vehicle cabin through the window portion).

The embodiment and each modification example described above have been described with an example of a vehicle having window portions in two places, that is, the front window portion 4 and the rear window portion 5, but this modification example is described with an example of a vehicle including a window portion in only one place.

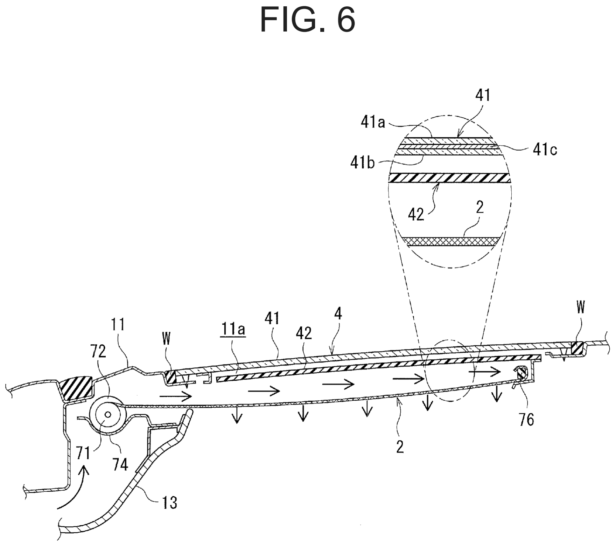

FIG. 6 is a view of an extended state (a state that covers the lower side of the window portion 4) of the shade 2 in this modification example seen from a side inside the vehicle cabin. As illustrated in FIG. 6, in this modification example, the shade 2 is configured to be movable along the front-rear direction of the vehicle body below the window portion 4, and is configured to move between a state of covering the entire window portion 4 as illustrated in FIG. 6 and a state of retracting from the window portion 4 by being rolled up by a roller 71 described later.

The window portion 4 in this modification example is described before the shade 2 and the configuration for moving the shade 2 are described. As illustrated in FIG. 6, the window portion 4 has a configuration in which an upper-side glass 41 and a lower-side glass 42 are mounted on the opening 11a in the roof panel 11.

The shape (outer edge shape) of the upper-side glass 41 substantially matches with the shape of the opening 11a provided in the roof panel 11, and an outer edge portion of the upper-side glass 41 is supported by the edge portion of the opening 11a in the roof panel 11. In other words, the outer edge portion of the upper-side glass 41 is placed on the edge portion of the opening 11a in the roof panel 11, and the weatherstrip W is fitted into a place between the outer edge portion of the upper-side glass 41 and the edge portion of the opening 11a in the roof panel 11 and prevents intrusion of rainwater from the outer edge portion of the upper-side glass 41.

As illustrated in FIG. 6 in a partially enlarged manner, the upper-side glass 41 is configured by a laminated glass obtained by interposing reflective film 41c between a first glass 41a positioned on the upper side and a second glass 41b positioned on the lower side. Each of the first glass 41a and the second glass 41b is a so-called inorganic glass (a normal glass of which raw material is silica sand and the like). The material of the reflective film 41c is not particularly limited. For example, the reflective film 41c may be configured by metal or metal oxide layers or may be a heat-reflective multilayer film and the like formed by polyethylene terephthalate (PET) and the like. As a result, the upper-side glass 41 reflects solar radiation. In the configuration of the upper-side glass 41, the upper-side glass 41 may be coated with a reflective material instead of or in addition to the reflective film 41c, or may be provided with a low-e coating to enhance thermal insulation properties The solar radiation can be effectively reflected by the above as well.

The lower-side glass 42 is formed by a resin glass such as acrylic or polycarbonate and is installed below the upper-side glass 41 at a predetermined interval. The interval between the upper-side glass 41 and the lower-side glass 42 is not particularly limited; however, the interval is set such that the air in the space between the upper-side glass 41 and the lower-side glass 42 can sufficiently function as a thermal insulation layer. In the present embodiment, the interval between the upper-side glass 41 and the lower-side glass 42 is set to a dimension from 40 mm to 60 mm. As a result, thermal energy (heat or cold) that passes through each of the glasses 41, 42 and intrudes into the vehicle cabin can be reduced. The space between the glasses 41, 42 may be set to be a closed space (form a closed space by applying a seal material between an outer edge portion of a lower surface of the upper-side glass 41 and an outer edge portion of an upper surface of the lower-side glass 42), and inert gas with thermal insulation performance such as argon gas may be sealed on the inside or a vacuum may be drawn inside the closed space.

In this modification example, the shape (outer edge shape) of the lower-side glass 42 is set to be slightly smaller than the shape of the upper-side glass 41. As a supporting structure of the lower-side glass 42, the lower-side glass 42 may be supported by a bracket (not shown) provided on the roof panel 11 or may be supported by a supported member (not shown) attached to the lower surface of the upper-side glass 41.

The configuration of the window portion 4 described above is also applicable to the window portions 4, 5 in the embodiment and each modification example described above.

Next, the shade 2 and the configuration for moving the shade 2 are described.

The shade 2 is configured by a membrane member as with the surface materials 22, 32 of the shades 2, 3 in the embodiment described above. In particular, in the present embodiment, the shade 2 formed by weaving metal fibers is employed. By employing the metal fibers, high heat dissipation rate and thermal conductivity are obtained. The shade 2 is not limited to being woven with metal fibers and may be formed by being woven with natural fibers, regenerated fibers, semi-synthetic fibers, synthetic fibers, inorganic fibers, and the like. The shade 2 has a lower surface that anodized and an upper surface that is aluminum-evaporated. The emissivity can be enhanced as a result of the lower surface being anodized, and solar radiation can be reflected as a result of applying aluminum evaporation on the upper surface. In the shade 2, the aperture ratio of the gaps (openings) between the fibers is set to about 5%. The value is not limited to the above. The shade 2 may be a non-woven fabric. The size of the shade 2 is set such that the entire window portion 4 can be covered. The configuration of the shade 2 described here is also applicable to the surface materials 22, 32 of the shades 2, 3 in the embodiment and each modification example described above.

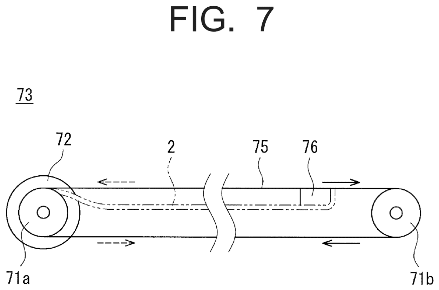

As the configuration for moving the shade 2, the roller 71 that rolls up the shade 2, an electric motor 72 that rotates the roller 71, and a moving mechanism 73(see FIG. 7) that moves the shade 2 along the roof panel 11 in accordance with the activation of the electric motor 72 are included.

The roller 71 has a rotating shaft installed along the vehicle width direction in a upper front part inside the vehicle cabin and is able to roll up and extend the shade 2 by rotating. One end of the roller 71 in the longitudinal direction thereof is coupled to a drive shaft of the electric motor 72 described later. Meanwhile, another end of the roller 71 in the longitudinal direction thereof is rotatably supported by a vehicle body component (for example, the front pillar 14). The length dimension of the roller 71 in the axial direction thereof is set to be slightly longer than the length dimension of the shade 2 in the vehicle width direction thereof.

The electric motor 72 is installed in a position close to one side in the vehicle width direction in the upper front part inside the vehicle cabin and is supported by a bracket 74 attached to a vehicle body component (for example, the front pillar 14). As described above, the drive shaft of the electric motor 72 is coupled to one end of the roller 71 in the longitudinal direction thereof. As a result, the roller 71 rotates by the activation of the electric motor 72, and it is possible to roll up the shade 2 by the roller 71 and extend the shade 2 from the roller 71.

FIG. 7 is a schematic view for describing the moving mechanism 73 of the shade 2. The moving mechanism 73 includes front-side pulleys 71a attached to both ends of the roller 71 in the axial direction thereof in an integrally rotating manner, rear-side pulleys 71b installed on both sides of an upper rear part inside the vehicle cabin in the vehicle width direction thereof, and cables 75 stretched between the pulleys 71a, 71b. Fixing members 76 attached to both vehicle-width-direction sides of a rear end portion of the shade 2 in the longitudinal direction (the front-rear direction of the vehicle body) thereof are attached to the cables 75. As a result, when the pulleys 71a rotate in the clockwise direction in FIG. 7 by the activation of the electric motor 72, the rotational force thereof is transmitted to each cable 75, each cable 75 travels along the horizontal direction (see arrows indicated by solid lines in FIG. 7), and the fixing members 76 move (move in the right direction in FIG. 7). As a result, the shade 2 is rolled out from the roller 71 and is moved in the direction of covering the window portion 4. Conversely, when the pulleys 71a rotate in the counterclockwise direction in FIG. 7 by the activation of the electric motor 72, the rotational force thereof is transmitted to each cable 75, each cable 75 travels along the horizontal direction (see arrows indicated by broken lines in FIG. 7), and the fixing members 76 move (move in the left direction in FIG. 7). As a result, the shade 2 is rolled up by the roller 71 and is moved in the direction of retracting from the window portion 4.

The electric motor 72 rotates in the forward direction or the reverse direction by an operation of a radiant air conditioning request switch (not shown) installed inside the vehicle cabin (an operation by an occupant). In other words, when the occupant requests radiant air conditioning, a radiant air conditioning request switch is turned ON. As a result, the roller 71 rotates in the clockwise direction in FIG. 7 by the activation of the electric motor 72, and the shade 2 moves in a direction of covering the window portion 4. On the other hand, when the occupant does not request radiant air conditioning, the radiant air conditioning request switch is turned OFF. As a result, the roller 71 rotates in the counterclockwise direction in FIG. 7 by the activation of the electric motor 72, and the shade 2 moves in a direction of retracting from the window portion 4. The electric motor 72 can be stopped at a freely-selected position by the operation of the radiant air conditioning request switch. In other words, the shade 2 can be stopped at a freely-selected position. For example, it is also possible to cover only places above the driver's seat and the passenger seat by the shade 2.

As illustrated in FIG. 6, the electric motor 72, the roller 71, and the bracket 74 are covered by the roof trim 13. As a result, the electric motor 72, the roller 71, and the bracket 74 are prevented from being seen from the inner side of the vehicle cabin, and the design quality of the inside of the vehicle cabin is ensured.

The internal space of the roof trim 13 is used as a space through which the conditioned air flows. Specifically, a part of the conditioned air from the air conditioning unit flows into the internal space of the roof trim 13 via a duct (not shown) (for example, the roof-side ducts 6 installed inside the front pillars 14 as in the embodiment described above). An upper end portion of the roof trim 13 is set in a position in close proximity to a lower surface of the shade 2 in the extended state. Therefore, the conditioned air that has flowed into the internal space of the roof trim 13 via the duct flows into a space above the shade 2 (a space between the shade 2 and the window portion 4 (the lower-side glass 42)) and flows from the front side to the rear side in the front-rear direction of the vehicle along this space without hardly leaking out from a gap between the upper end portion of the roof trim 13 and the lower surface of the shade 2. While the conditioned air flows through this space, the cold or heat of the conditioned air is transmitted to the shade 2, and the shade 2 is cooled or heated. As a result, it becomes possible to cool or heat the inside of the vehicle cabin by radiation. It is preferable that the duct (for example, the roof-side ducts 6 installed inside the front pillars 14) connected to the internal space of the roof trim 13 have a valve that can open and close in conjunction with the operation of the radiant air conditioning request switch, the valve be opened by the radiant air conditioning request switch being turned ON, and the valve be closed by the radiant air conditioning request switch being turned OFF.

The interval dimension between the shade 2 and the window portion 4 in a state in which the shade 2 covers the window portion 4 is set by an experiment or a simulation such that the pressure loss of the conditioned air that flows through the space does not become excessively large and the conditioned air flows into a place above the rear seats (such that air conditioning of cooling or heating by radiation becomes possible around the rear seats). In the present embodiment, the interval dimension between the shade 2 and the window portion 4 is set to a dimension from 50 mm to 100 mm.

Next, air conditioning (temperature regulation) operation in this modification example is described. When the occupant requests radiant air conditioning, the radiant air conditioning request switch is turned ON. As a result, the shade 2 covers the window portion 4 by the activation of the electric motor 72 (see the state illustrated in FIG. 6). In this state, at the time of a cooling request, for example, a part of the conditioned air (dehumidified cool air) generated by the air conditioning unit flows into the internal space of the roof trim 13 from the duct, flows into the space between the shade 2 and the window portion 4, and passes through the gaps (the openings between the fibers) in the shade 2. As a result, the temperature of a lower surface (a surface facing the inside of the vehicle cabin) of the shade 2 is cooled to a temperature around that of the conditioned air. The conditioned air that has passed through the gaps in the shade 2 is also supplied toward the seats. Condensation is eliminated or reduced because the conditioned air that passes through the gaps in the shade 2 is dehumidified in this case as well. Meanwhile, at the time of a heating request, the temperature of the lower surface of the shade 2 is heated to a temperature around that of the conditioned air as a result of a part of the conditioned air flowing into the space between the shade 2 and the window portion 4 and passing through the gaps (the openings between the fibers) in the shade 2. The conditioned air that has passed through the gaps in the shade 2 is also supplied toward the seats in this case as well.

In the window portion 4, there is space between the upper-side glass 41 and the lower-side glass 42, and hence thermal energy (heat or cold) that passes through each of the glasses 41, 42 and intrudes into the vehicle cabin is reduced. In other words, cases in which thermal energy that passes through each of the glasses 41, 42 and intrudes into the vehicle cabin is transferred to the shade 2 are reduced, the deterioration of the environment inside the vehicle cabin due to thermal energy (heat or cold) that intrudes into the vehicle cabin through the window portion 4 can be reduced, and the comfort inside the vehicle cabin can be enhanced as with the case of the embodiment described above.

In the present embodiment, the shade 2 is movable between a state of covering the lower side of the window portion 4 and enabling cooling or heating of the inside of the vehicle cabin by radiation and a state of retracting from the window portion 4 such that the window portion faces the inside of the vehicle cabin. As a result, an operation of mounting and removing the shade 2 as needed becomes unnecessary, and the operation can be streamlined.

### Modification Example 4

Next, Modification Example 4 is described. This modification example is different from Modification Example 3 in terms of means for supplying conditioned air to the space between the shade 2 and the lower-side glass 42 in Modification Example 3. Other configurations are similar to those of Modification Example 3. Therefore, the means for supplying conditioned air to the space between the shade 2 and the lower-side glass 42 is mainly described below. In this modification example, description is made for a vehicle in which individual shades are installed for a place above the driver's seat and a place above the passenger seat. In other words, the moving mechanisms are individually applied to the shade on the driver's seat side and the shade on the passenger seat side, and each shade is independently movable.

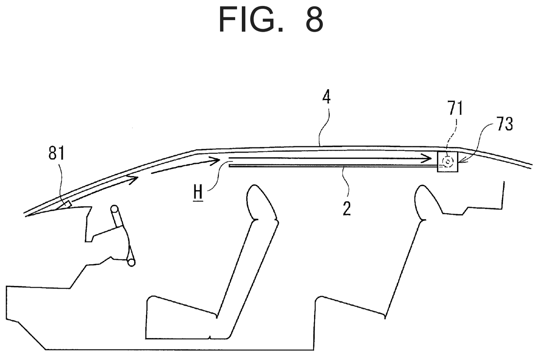

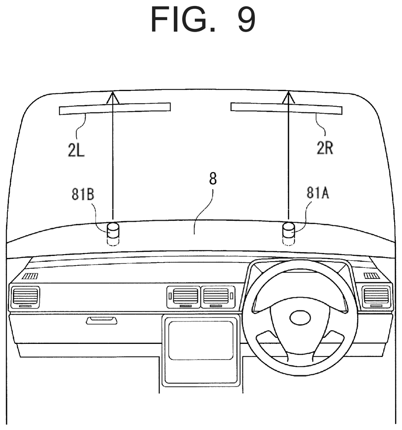

FIG. 8 is a view of the inside of the vehicle cabin illustrating the extended state of the shade 2 in this modification example seen from a side. FIG. 9 is a view illustrating the inside of the vehicle cabin for describing a blowing state of conditioned air toward shades 2R, 2L in this modification example. As illustrated in FIG. 8, in this modification example, the roller 71 of the moving mechanism 73 that moves the shade 2 along the window portion 4 is installed in an upper rear part inside the vehicle cabin. In other words, the shade 2 is configured to be rolled up in an upper rear part inside the vehicle cabin. In other words, the form in which the moving mechanism 73 is installed is reversed in the front-rear direction as compared to Modification Example 3 described above. By the configuration as above, in a state in which the shade 2 covers the lower side of the window portion 4, an opening portion H from which conditioned air flowing from a place ahead is introduced to the space between the shade 2 and the window portion 4 is provided between a front end portion of the shade 2 and a front end portion of the window portion 4.

Lower ends of two blowing pipes 81 (81A, 81B) passing through an upper surface of an instrument panel 8 are connected to an air duct (not shown) extending from the air conditioning unit installed inside the dashboard. One of the two blowing pipes 81A, 81B is installed in front of the driver's seat and tilted to supply the conditioned air flowing from the air duct to a space between the shade 2 above the driver's seat (the shade 2R on the driver's seat side) and the window portion 4. Meanwhile, the other of the two blowing pipes 81A, 81B is installed in front of the passenger seat and tilted to supply the conditioned air flowing from the air duct to a space between the shade 2 above the passenger seat (the shade 2L on the passenger seat side) and the window portion 4.

By the configuration as above, in the air conditioning (temperature regulation) operation in this modification example, the conditioned air blown out from the blowing pipes 81A, 81B passes through the opening portion H and is supplied to the space between the window portion 4 and the shade 2, and the temperature of the lower surface (the surface facing the inside of the vehicle cabin) of the shade 2 is cooled or heated to a temperature around that of the conditioned air. The conditioned air that has passed through the gaps in the shade 2 is also supplied toward the seats. As a result, as with the case of the embodiment described above, the deterioration of the environment inside the vehicle cabin due to thermal energy (heat or cold) that intrudes into the vehicle cabin through the window portion 4 can be reduced, and the comfort inside the vehicle cabin can be enhanced.

### Other Embodiments

The present invention is not limited to the embodiment and each of the modification examples, and all modifications and applications encompassed within the scope of the claims and the scope equivalent thereto are possible.

For example, in the embodiment, Modification Example 1, and Modification Example 2, a case in which the present invention is applied as a structure of the roof portion 1 of a vehicle including a panoramic roof is described as an example. The present invention is not limited to the above, and application as a structure of a roof portion of a vehicle including a sunroof with an opening portion in only one place is also possible. In the case of application as the structure of the roof portion of the vehicle including the sunroof, the roof-side ducts 6 do not necessarily need to be installed inside the roof side rails 12. For example, the roof-side ducts 6 may extend from the inside of the front pillars 14 to the inside of the roof cross member installed in a front end edge portion of the roof panel 11.

In the embodiment, Modification Example 1, and Modification Example 2, a case in which the shades 2, 3 are installed on the window portions 4, 5 afterwards and the mounting state is continuously maintained is described as an example. The present invention is not limited to the above and can be applied to a case in which the shades 2, 3 are removed from the window portions 4, 5 as needed and this state is continuously maintained. In this case, the front-side air holes 13b in the vertical wall portions 13a of the roof trim 13 face the inside of the vehicle cabin in the front window portion 4 and the rear-side air holes 13d in the vertical wall portions 13c of the roof trim 13 face the inside of the vehicle cabin in the rear window portion 5, but the air holes 13b, 13d may be used as outlets for conditioned air by mounting registers on the air holes 13b, 13d. In this case, the front-side air hole 13b and the rear-side air hole 13d are examples of "a ventilation hole around the roof window" in the present invention. When the conditioned air is not requested to blow out from a place above the occupant, the air holes 13b, 13d may be sealed, or valves provided at positions at which the roof-side ducts 6 are connected to the air duct may be placed in a fully closed state.

In Modification Example 3 and Modification Example 4, the lower-side glass 42 is a resin glass, but the present invention is not limited thereto, and the lower-side glass 42 may be an inorganic glass.

In the embodiment and each modification example, the window portion is configured by mounting the roof glass G on the opening 11a in the roof panel 11. The present invention is not limited to the above, and a metal plate or a resin plate may be used instead of a glass when visible light transmission is not requested in the roof portion 1.

In the embodiment, Modification Example 1, and Modification Example 2, the roof-side ducts 6 are installed inside the left and right roof side rails 12, but it is possible to install the roof-side duct 6 in only one of the roof side rails 12.

The present invention is applicable to a structure of a roof portion of a vehicle that enhances the comfort inside a vehicle cabin with use of a shade.

## Claims

1. A roof assembly (1) of a vehicle comprising:
a roof panel (11) having an opening;
a roof window (4, 5) including the opening;
a roof side rail (12); and
a roof air passage connected to an air conditioning unit, wherein
the roof assembly (1) is provided with a ventilation hole around the roof window.

2. The roof assembly (1) according to claim 1, wherein conditioned air blown out from the ventilation hole is air of which temperature is lower than a temperature inside a vehicle cabin.

3. The roof assembly (1) according to claim 1, wherein conditioned air blown out from the ventilation hole is air of which temperature is higher than a temperature inside a vehicle cabin.

4. The roof assembly (1) according to any one of claims 1 to 3, wherein
the roof air passage is installed in the roof side rail (12), and
the ventilation hole is provided in a vertical wall on a vehicle inner side of the roof side rail (12) and communicates with the roof air passage.

5. The roof assembly (1) according to any one of claims 1 to 3, further comprising a shade (2, 3) that has a hollow interior space and covers at least a part of the roof window, wherein
the roof air passage communicates with the hollow interior space of the shade (2, 3), and
the ventilation hole is provided in a lower surface of the shade (2, 3).

6. The roof assembly (1) according to claim 5, wherein the number of openings of the ventilation hole per unit area of the lower surface of the shade (2, 3) is larger in a region corresponding to a sitting position of an occupant than in another region.

7. The roof assembly (1) according to any one of claims 1 to 6, wherein
the roof window (4, 5) has a plurality of glasses (41, 42), and
a space is provided between each adjacent pair of the glasses (41, 42).

8. The roof assembly (1) according to claim 7, wherein a glass (42) positioned on an inner side of a vehicle cabin among the glasses (41, 42) is a resin glass.

9. The roof assembly (1) according to claim 7 or 8, wherein a glass (41) positioned in an uppermost portion among the glasses (41, 42) includes a reflective material that reflects solar radiation.
